# FASCICULE DE BREVET EUROPEEN

(11) **EP 0 997 355 B1**
(45) Date de publication et mention de la délivrance du brevet: **05.03.2003**
(21) Numéro de dépôt: 99402445.3
(22) Date de dépôt: 06.10.1999
(51) Int. Cl.: B60R 21/22

(54) **Dispositif de garnissage d'un module de protection à sac gonflable fixé latéralement à l'armature de dossier d'un siège de véhicule automobile**
Verkleidungsvorrichtung für einen seitlich auf dem Rahmen einer Fahrzeugsitzrückenlehne befestigten Luftsack
Trimming device for airbag module laterally fixed on a motor vehicle seat back frame

(30) Priorité: 27.10.1998 FR 9813449
(43) Date de publication de la demande: 03.05.2000
(73) Titulaire: AUTOMOBILES PEUGEOT, 75116 Paris (FR); AUTOMOBILES CITROEN, 92200 Neuilly-sur-Seine (FR)
(72) Inventeur: Guenat, Jean-Claude, 90000 Belfort (FR)
(74) Mandataire: Thinat, Michel

(56) Documents cités:
- DE-A- 19 632 586
- DE-A- 19 642 938
- US-A- 5 799 970

## Description

La présente invention concerne un dispositif de garnissage d'un module de protection à sac gonflable fixé latéralement à l'armature de dossier d'un siège notamment pour un véhicule automobile.

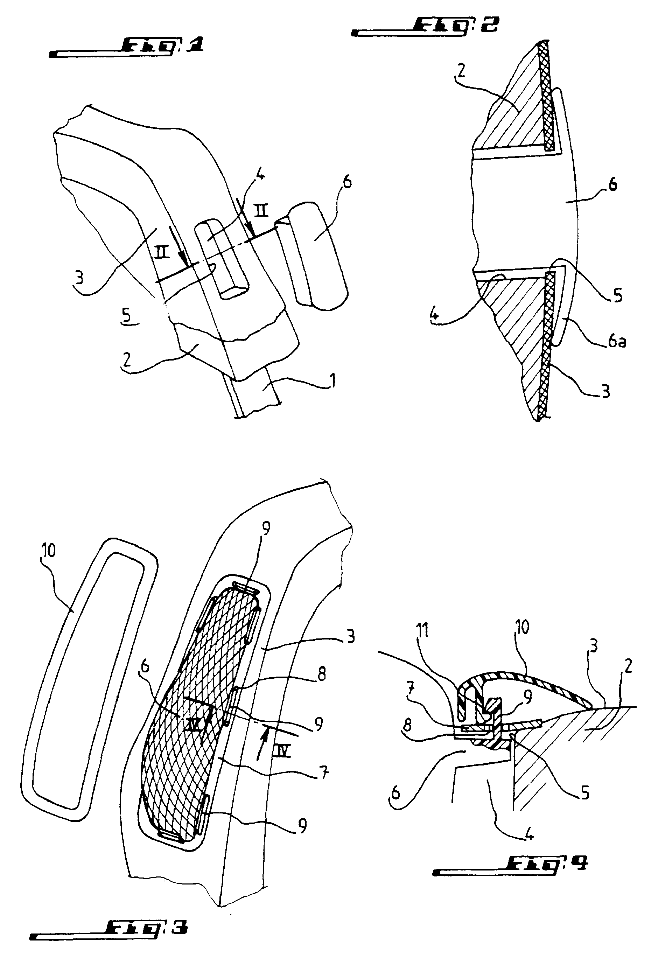

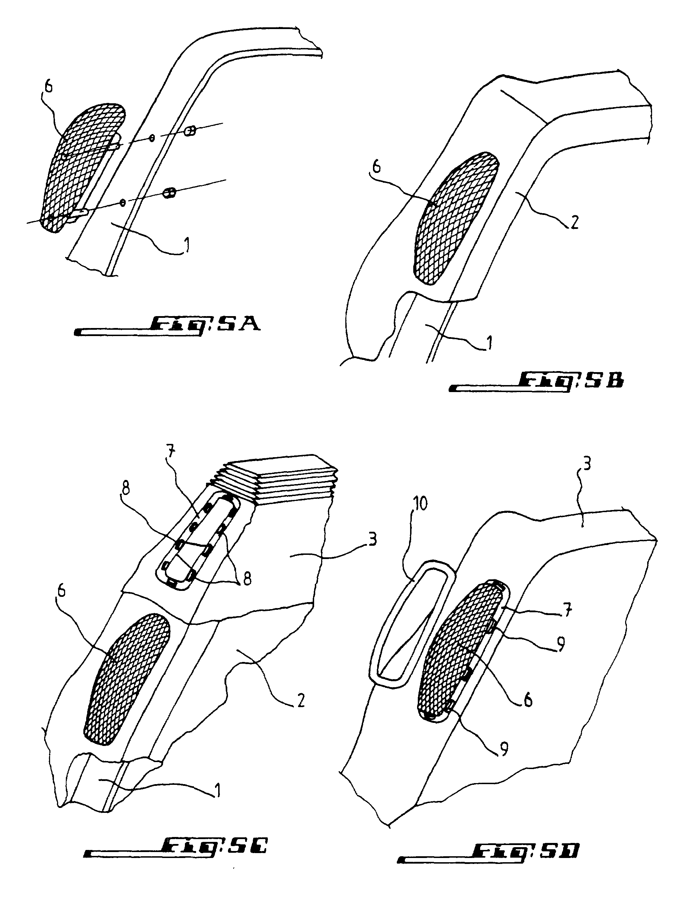

Les figures 1 et 2 représentent un dispositif de garnissage antérieurement connu où la figure 1 représente une vue partielle éclatée d'un dossier de siège de véhicule automobile et la figure 2 est une vue partielle agrandie en coupe suivant la ligne II-II de la figure 1.

Sur ces figures, la référence 1 désigne une armature métallique du dossier sur laquelle est montée une matelassure 2 qui reçoit une coiffe de garnissage 3. La matelassure 2 comporte latéralement un logement 4 s'étendant approximativement transversalement à l'armature et la coiffe de garnissage 3 comporte une découpe 5 s'ajustant autour du bord d'ouverture périphérique du logement 4 lorsque la coiffe 3 recouvre la matelassure 2. Un module de protection en forme de boîtier 6 contenant un sac gonflable 6 est inséré dans le logement 4 de la matelassure 2 à travers la découpe 5 de la coiffe 3 et est fixé, par exemple par vissage, sur l'armature 1. En position de fixation, le module 6 a une partie latéralement apparente, c'est-à-dire faisant saillie d'un côté du siège. Un tel module de protection est connu en soi et permet de protéger le conducteur ou le passager d'un véhicule lors d'un choc latéral qui provoque la libération et le gonflement du sac de protection.

Le module de protection 6 a sa partie externe ayant une forme 6a recouvrant largement la découpe 5 de la coiffe de garnissage 3 et exerce une compression de l'ensemble constitué par cette coiffe et la matelassure 2 pour assurer une présentation d'ensemble et une finition correctes.

Cependant, du fait des variations de cotes des composants du dossier et de la souplesse des matériaux constituant la coiffe de garnissage 3 et la matelassure 2, la mise en place de la partie de recouvrement 6a du module de protection 6 sur la coiffe et la matelassure de façon à assurer la finition et la présentation attendues, n'est pas toujours garantie de façon absolue. En outre, lorsque le siège est occupé, la déformation de la matelassure et de la coiffe peut provoquer l'apparition inesthétique de zones de dégagement entre la partie de recouvrement 6a du module de protection 6 et l'ensemble constitué par la matelassure et la coiffe de garnissage.

Un dispositif comportant les caractéristiques du préambule de la revendication 1 est connu de DE-A-196 32 586.

L'invention a pour but d'éliminer les inconvénients ci-dessus en proposant un dispositif de garnissage assurant une qualité optimale de garnissage ainsi qu'une présentation et une finition d'ensemble excellentes.

A cet effet, selon l'invention, le dispositif de garnissage comprend les caractéristiques selon la revendication 1.

Avantageusement, le cache amovible est constitué d'un profilé annulaire de garnissage.

La bande annulaire de la coiffe de garnissage est en un matériau souple et est fixée à la coiffe par soudage ou par couture.

De préférence, les éléments saillants du module de protection sont constitués par des ailettes recourbées en forme de crochet et le profilé de garnissage est fixé au module de protection par encliquetage avec les ailettes recourbées.

De préférence, le profilé de garnissage comprend des languettes élastiques en forme de crochet pouvant s'accrocher aux ailettes recourbées du module de protection.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels.
La figure 1 est une vue partielle en perspective éclatée d'un dossier de siège pour un véhicule automobile selon l'art antérieur ;
La figure 2 est une vue agrandie partielle en coupe suivant la ligne II-II de la figure 1 ;
La figure 3 est une vue agrandie d'une partie de la coiffe de garnissage conforme à l'invention et d'un profilé de finition de l'invention prêt à être fixé latéralement au dossier du siège ;
La figure 4 est une vue partielle agrandie en coupe transversale suivant la ligne IV-IV de la figure 3 avec le profilé de finition en position assemblée ; et
Les figures 5A à 5D représentent les diverses phases de montage du dispositif de garnissage de l'invention.

Les éléments de la partie de dossier représentée aux figures 3, 4 et 5A-5D et identiques aux éléments du dossier représenté aux figures 1 et 2 portent les mêmes références et ne seront donc pas décrits à nouveau.

En se reportant tout d'abord aux figures 3 et 4, la coiffe de garnissage 3 comprend une bande annulaire de bordure 7, de forme générale rectangulaire, fixée à la périphérie de la découpe latérale 5 de cette coiffe, par exemple par soudage ou par couture. La bande rapportée 7 est réalisée en un matériau souple, tel que par exemple une matière plastique peu épaisse, de l'ordre du millimètre, et comporte plusieurs ouvertures 8, de préférence oblongues, permettant le passage d'éléments saillants 9 solidaires du module de protection 6 de façon à assurer le positionnement de la bande rapportée 7 autour de la partie en saillie du module 6 et ainsi le maintien de la coiffe de garnissage 3 relativement au module.

Les éléments saillants 9 sont de préférence constitués par des ailettes venant de matière avec le module 6 et recourbées à leurs extrémités supérieures en forme de crochet.

Le dispositif comprend en outre un cache amovible constitué d'un profilé annulaire de garnissage ou de finition 10 pouvant être réalisé en une matière plastique moulée et pouvant être fixé au module de protection 6 en entourant celui-ci de façon à recouvrir en les occultant la bande annulaire 7 de la coiffe de garnissage 3 et les éléments saillants 9 de positionnement de cette bande.

Le profilé 10 est solidarisé au module de protection 6 par encliquetage avec les ailettes recourbées 9 et comprend à cet effet un certain nombre de languettes élastiques 11 se terminant par une partie en crochet permettant leur accrochage aux ailettes recourbées 9 du module 6. Le profilé de garnissage 10 a sa paroi supérieure externe légèrement bombée dont le bord périphérique externe éloigné du module 6 vient en appui sur la coiffe de garnissage 3 comme cela ressort clairement de la figure 4.

La mise en place du dispositif de garnissage de l'invention est représentée aux figures 5A à 5D.

Tout d'abord, comme représenté en figure 5A, le boîtier du module de protection 6, dans lequel est emprisonné le sac gonflable, est fixé sur la partie latérale de l'armature 1 du dossier.

Ensuite, comme représenté en figure 5B, la matelassure 2 du dossier est montée sur l'ensemble constitué par l'armature 1 et le module de protection 6 qui est alors logé dans le logement de la matelassure 2 en faisant saillie extérieurement de celle-ci.

La figure 5C montre que la coiffe 3 avec sa bande annulaire rapportée 7 est enfilée à la manière d'une chaussette sur la matelassure 2 jusqu'à la recouvrir complètement et positionner la bande annulaire 7 autour de la partie en saillie correspondante du module de protection 6 par les éléments saillants 9 intégrés à ce module traversant les ouvertures 8 de la bande, de la sorte la coiffe de garnissage 3 est maintenue relativement au module 6.

Enfin, le profilé de finition 10 est fixé au module de protection 6 en encliquetant les languettes élastiques 11 avec les éléments saillants 9 en forme de crochet de manière à recouvrir en les rendant invisibles de l'extérieur la bande annulaire 7 et les éléments saillants 9 ainsi que la partie du module 6 située en partie supérieure du logement 4 de la matelassure 2.

Le dispositif de garnissage ci-dessus décrit de l'invention, outre qu'il présente un bel aspect esthétique, reste en place indépendamment des mouvements de l'occupant du siège et/ou des variations de cotes des composants du dossier de siège et de la souplesse des matériaux constituant la coiffe de garnissage 3 et la matelassure 2.

## Revendications

1. Dispositif de garnissage d'un module de protection à sac gonflable (6) fixé de façon apparente latéralement à l'armature (1) de dossier d'un siège pour un véhicule automobile, comprenant une matelassure (2) montée sur l'armature (1) et ayant un logement latéral (4) de réception du module de protection (6) dont une partie fait saillie de la matelassure (2) et une coiffe de garnissage (3) recouvrant la matelassure (2) et ayant une découpe latérale (5) entourant la périphérie de la partie en saillie du module de protection (6) et qui comprend une bande annulaire (7) fixée à la périphérie de sa découpe latérale (5) **caractérisé en ce que** la coiffe de garnissage (3) comporte plusieurs ouvertures (8) permettant le passage d'éléments saillants (9) solidaires du module de protection (6), assurant le positionnement de la bande annulaire (7) relativement au module (6) et le maintien de la coiffe de garnissage (3) autour de la partie en saillie du module de protection (6), et **en ce qu'**un cache amovible (10) est fixé au module de protection (6) autour de celui-ci de façon à recouvrir en les occultant la bande annulaire (7) de la coiffe de garnissage (3) et les éléments saillants (9) de positionnement de cette bande.

2. Dispositif selon la revendication 1, **caractérisé en ce que** le cache amovible est constitué d'un profilé annulaire de garnissage (10).

3. Dispositif selon la revendication 1 ou 2, **caractérisé en ce que** la bande annulaire (7) de la coiffe de garnissage (3) est en un matériau souple et est fixée à la coiffe (3) par soudage ou par couture.

4. Dispositif selon la revendication 2 ou 3, **caractérisé en ce que** les éléments saillants précités sont constitués par des ailettes recourbées en forme de crochet (9) et le profilé de garnissage (10) est fixé au module de protection (6) par encliquetage avec les ailettes recourbées (9).

5. Dispositif selon la revendication 4, **caractérisé en ce que** le profilé de garnissage (10) comprend des languettes élastiques (11) en forme de crochet pouvant s'accrocher aux ailettes recourbées (9) du module de protection (6).

## Patentansprüche

1. Vorrichtung zum Umkleiden eines Luftsackschutzmoduls (6), das seitlich abragend am Rahmen (1) der Rückenlehne eines Sitzes für Kraftfahrzeuge befestigt ist, mit einer Polsterung (2), die am Rahmen (1) angebracht ist und eine Seitenaufnahme (4) zum Aufnehmen des Schutzmoduls (6) aufweist, wovon ein Teil von der Polsterung (2) vorsteht, und mit einer Umkleidungshülle (3), welche die Polsterung (2) abdeckt und eine seitliche Aussparung (5) aufweist, die den Umfang des vom Schutzmodul (6) vorstehenden Teils umschließt, und mit einem ringförmigen Band (7), das am Umfang ihrer Seitenaussparung (5) befestigt ist, **dadurch gekennzeichnet, dass** die Umkleidungshülle (3) mehrere Öffnungen (8) aufweist, die den Durchtritt von vorstehenden Teilen (9) ermöglichen, die fest mit dem Schutzmodul (6) verbunden sind und die Positionierung des Ringbands (7) relativ zum Modul (6) und den Halt der Umkleidungshülle (3) um den vom Schutzmodul (6) vorstehenden Teil herum gewährleisten, und dass eine abnehmbare Abdeckung (10) am Schutzmodul (6) so um dieses herum befestigt ist, dass sie das Ringband (7) der Umkleidungshülle (3) und die vorstehenden Teile (9) zum Positionieren dieses Bandes abdeckt, indem sie diese verdeckt.

2. Vorrichtung nach Anspruch 1, **dadurch gekennzeichnet, dass** die abnehmbare Abdeckung aus einem ringförmigen Umkleidungsprofil (10) besteht.

3. Vorrichtung nach Anspruch 1 oder 2, **dadurch gekennzeichnet, dass** das Ringband (7) der Umkleidungshülle (3) aus einem nachgiebigen Material besteht und an der Hülle (3) angeschweißt oder angenäht ist.

4. Vorrichtung nach Anspruch 2 oder 3, **dadurch gekennzeichnet, dass** die vorgenannten vorstehenden Teile aus hakenförmig umgebogenen Rippen (9) bestehen und das Umkleidungsprofil (10) durch Einschnappen mit den umgebogenen Rippen (9) am Schutzmodul (6) befestigt ist.

5. Vorrichtung nach Anspruch 4, **dadurch gekennzeichnet, dass** das Umkleidungsprofil (10) hakenförmige Federzungen (11) enthält, die sich an den umgebogenen Rippen (9) des Schutzmoduls (6) einhängen können.

## Claims

1. A trim device for an airbag module (6) fixed laterally at surface level to the frame (1) of a backrest of a motor vehicle seat, comprising padding (2) attached to the frame (1) and having a lateral housing (4) to receive the airbag module (6) a portion of which projects from the padding (2), and a trim cover (3) covering the padding (2), which trim cover (3) has a lateral cut-out (5) surrounding the periphery of the projecting portion of the airbag module (6) and includes an annular strip (7) fixed to the periphery of the lateral cut-out (5), **characterised in that** the trim cover (3) includes a plurality of apertures (8) through which projecting elements (9) integral with the airbag module (6) can pass and which ensure the positioning of the annular strip (7) relative to the module (6) and retain the trim cover (3) around the projecting portion of the airbag module (6), and **in that** a removable masking element (10) is fixed to the airbag module (6) around same so as to cover and conceal the annular strip (7) of the trim cover (3) and the projecting positioning elements (9) of said strip.

2. A device according to Claim 1, **characterised in that** the removable masking element is formed by an annular trim profile (10).

3. A device according to Claim 1 or 2, **characterised in that** the annular strip (7) of the trim cover (3) is made of flexible material and is fixed to the cover (3) by welding or stitching.

4. A device according to Claim 2 or 3, **characterised in that** the above-mentioned projecting elements are formed by curved blades formed as hooks (9) and the trim profile (10) is fixed to the airbag module (6) by latching with the curved blades (9).

5. A device according to Claim 4, **characterised in that** the trim profile (10) includes hook-shaped elastic tongues (11) able to latch with the curved blades (9) of the airbag module (6).
